# EUROPEAN PATENT APPLICATION

(11) **EP 4 722 060 A1**
(43) Date of publication of application: **08.04.2026**
(21) Application number: 25206213.8
(22) Date of filing: 02.10.2025
(51) Int. Cl.: B60W 10/18, B60W 10/20, B60W 30/18, B60W 50/023, B60W 50/029, B60W 60/00, G05D 1/85, G05D 1/87, G06F 11/16

(54) **VEHICLE PLATFORM AND METHOD FOR CONTROLLING VEHICLE PLATFORM**

(30) Priority: 04.10.2024 JP 2024175184
(71) Applicant: TOYOTA JIDOSHA KABUSHIKI KAISHA, Toyota-shi, Aichi-ken 471-8571 (JP)
(72) Inventor: TANAKA, Go, Toyota-Shi, Aichi-Ken, 471-8571 (JP); SUZUKI, Ikuma, Toyota-Shi, Aichi-Ken, 471-8571 (JP); HAYASHI, Taisuke, Toyota-Shi, Aichi-Ken, 471-8571 (JP); OZAWA, Kazuhiro, Toyota-Shi, Aichi-Ken, 471-8571 (JP); WATARI, Yuji, Toyota-Shi, Aichi-Ken, 471-8571 (JP)
(74) Representative: Cabinet Beau de Loménie

(57) **Abstract**

A VP includes: a base vehicle (30) including first/second function units (321/322, 331/332) that perform a specific function used for autonomous/manual drivings; main/sub VCIBs (41/42) that relay control communication between an ADK and the first/second function units via first/second paths, respectively; and a power switch (39). A driving mode of the VP set in each of the main/sub VCIBs is switchable to an autonomous or manual driving mode. When a two-system failure occurs in a case where the driving mode set in the main/sub VCIB is the autonomous driving mode, the first/second function unit carries out emergency stop control (S318), the two-system failure being a failure that makes communication or control via the first/second paths impossible. When an operation of switching off the base vehicle by the power switch is accepted after the emergency stop control is carried out, the main/sub VCIB switches the driving mode set in the main/sub VCIB to the manual driving mode (S441 to S444).

## Description

### CROSS REFERENCE TO RELATED APPLICATIONS

This nonprovisional application is based on Japanese Patent Application No. 2024-175184 filed on October 4, 2024 with the Japan Patent Office, the entire contents of which are hereby incorporated by reference and to which the skilled person can refer when considering the present disclosure.

### BACKGROUND

### Field

The present disclosure relates to a vehicle platform and a method for controlling the vehicle platform, and particularly to a vehicle platform to and from which an autonomous driving kit that gives an instruction for autonomous driving is attachable and detachable, the vehicle platform being configured to be capable of autonomous driving, and a method for controlling the vehicle platform.

### Description of the Background Art

There has conventionally been a vehicle platform (hereinafter referred to as "VP") on which an autonomous driving kit (hereinafter referred to as "ADK") is mountable, the VP including a base vehicle and a vehicle control interface box (hereinafter referred to as "VCIB") that interfaces between the base vehicle and an autonomous driving system through a communication bus (refer to, for example, Japanese Patent Laying-Open No. 2024-106017). In the VP, as paths through which signals are exchanged between the ADK and the VP, there are two systems, i.e., a path via a main bus and a main VCIB and a path via a sub bus and a sub VCIB.

### SUMMARY

In the VP in Japanese Patent Laying-Open No. 2024-106017, when both of the two paths through which signals are exchanged between the ADK and the VP fail, the ADK cannot instruct the VP of transition to manual driving, which may make it impossible to move the base vehicle by manual driving.

The present disclosure has been made to solve the above-described problem and an object thereof is to provide a vehicle platform in which switching to manual driving is possible even when transition to manual driving cannot be made in accordance with an instruction from an autonomous driving kit, and a method for controlling the vehicle platform.

A vehicle platform according to the present disclosure is a vehicle platform to and from which an autonomous driving kit that gives an instruction for autonomous driving is attachable and detachable, the vehicle platform being configured to be capable of autonomous driving. The vehicle platform includes: a base vehicle including a first function unit and a second function unit that perform a specific function used for autonomous driving and manual driving; a first vehicle control interface box that relays control communication between the autonomous driving kit and the first function unit via a first path; a second vehicle control interface box that relays control communication between the autonomous driving kit and the second function unit via a second path; and a power switch that accepts an operation of switching on or off the base vehicle. A driving mode of the vehicle platform set in each of the first vehicle control interface box and the second vehicle control interface box is switchable to an autonomous driving mode or a manual driving mode. When a two-system failure occurs in a case where the driving mode set in the first vehicle control interface box is the autonomous driving mode, the first function unit carries out emergency stop control, the two-system failure being a failure that makes communication or control via the first path and the second path impossible, and when the two-system failure occurs in a case where the driving mode set in the second vehicle control interface box is the autonomous driving mode, the second function unit carries out the emergency stop control. When an operation of switching off the base vehicle by the power switch is accepted after the emergency stop control is carried out, the first vehicle control interface box switches the driving mode set in the first vehicle control interface box to the manual driving mode, or when the operation of switching off the base vehicle by the power switch is accepted after the emergency stop control is carried out, the second vehicle control interface box switches the driving mode set in the second vehicle control interface box to the manual driving mode.

According to such a configuration, even when an instruction from the autonomous driving kit is not transmitted to the base vehicle due to the occurrence of the two-system failure, the emergency stop control is carried out. When the operation of switching off the base vehicle is accepted after the emergency stop control, the driving mode is switched to the manual driving mode. As a result, the vehicle platform in which switching to manual driving is possible even when transition to manual driving cannot be made in accordance with an instruction from the autonomous driving kit can be provided.

When a one-system failure occurs in a case where the driving mode set in the first vehicle control interface box is the autonomous driving mode, the first vehicle control interface box switches the driving mode in accordance with an instruction from the autonomous driving kit, the one-system failure being a failure that makes communication or control via the first path or the second path impossible, and when the one-system failure occurs in a case where the driving mode set in the second vehicle control interface box is the autonomous driving mode, the second vehicle control interface box switches the driving mode in accordance with an instruction from the autonomous driving kit.

According to such a configuration, when the one-system failure occurs, autonomous driving by a redundant system is also possible. Therefore, a determination of the autonomous driving kit can be followed. As a result, control can be carried out in accordance with an intention of the autonomous driving kit.

When an instruction to switch the driving mode to the manual driving mode is received from the autonomous driving kit at the time of occurrence of the two-system failure, the first vehicle control interface box switches the driving mode set in the first vehicle control interface box to the manual driving mode, or when an instruction to switch the driving mode to the manual driving mode is received from the autonomous driving kit at the time of occurrence of the two-system failure, the second vehicle control interface box switches the driving mode set in the second vehicle control interface box to the manual driving mode.

According to such a configuration, even at the time of occurrence of the two-system failure, the instruction to switch the driving mode from the autonomous driving kit can be followed when the instruction from the autonomous driving kit is possible. As a result, control can be carried out in accordance with an intention of the autonomous driving kit.

When the driving mode set in the first vehicle control interface box is switched to the manual driving mode after the one-system failure or the two-system failure occurs, the first vehicle control interface box prohibits switching again to the autonomous driving mode, or when the driving mode set in the second vehicle control interface box is switched to the manual driving mode after the one-system failure or the two-system failure occurs, the second vehicle control interface box prohibits switching again to the autonomous driving mode.

According to such a configuration, when the driving mode is switched to the manual driving mode after the one-system failure or the two-system failure occurs, there is high possibility that continuation of autonomous driving is difficult. As a result, by prohibiting switching again to the autonomous driving mode, the reliability of control can be increased.

According to another aspect of the present disclosure, a method for controlling a vehicle platform is a method for controlling a vehicle platform to and from which an autonomous driving kit that gives an instruction for autonomous driving is attachable and detachable, the vehicle platform being configured to be capable of autonomous driving. The vehicle platform includes: a base vehicle that performs a specific function used for autonomous driving and manual driving; a first vehicle control interface box that relays control communication between the autonomous driving kit and the base vehicle via a first path; a second vehicle control interface box that relays control communication between the autonomous driving kit and the base vehicle via a second path; and a power switch that accepts an operation of switching on or off the base vehicle. A driving mode of the vehicle platform set in each of the first vehicle control interface box and the second vehicle control interface box is switchable to an autonomous driving mode or a manual driving mode. The method includes: when a two-system failure occurs in a case where the driving mode set in the first vehicle control interface box is the autonomous driving mode, controlling, by the first vehicle control interface box, the base vehicle to carry out emergency stop control, the two-system failure being a failure that makes communication or control via the first path and the second path impossible; and when the two-system failure occurs in a case where the driving mode set in the second vehicle control interface box is the autonomous driving mode, controlling, by the second vehicle control interface box, the base vehicle to carry out the emergency stop control; and when an operation of switching off the base vehicle by the power switch is accepted after the emergency stop control is carried out, switching, by the first vehicle control interface box, the driving mode set in the first vehicle control interface box to the manual driving mode; or when the operation of switching off the base vehicle by the power switch is accepted after the emergency stop control is carried out, switching, by the second vehicle control interface box, the driving mode set in the second vehicle control interface box to the manual driving mode.

According to such a configuration, the method for controlling the vehicle platform in which switching to manual driving is possible even when transition to manual driving cannot be made in accordance with an instruction from the autonomous driving kit can be provided.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram showing overview of a vehicle according to an embodiment of the present disclosure.
Fig. 2 is a diagram showing in detail configurations of an ADK, a VCIB and a VP according to the present embodiment.
Fig. 3 is a flowchart showing a flow of a process performed by each control system and a first process performed by the VCIB in the present embodiment.
Fig. 4 is a flowchart showing a flow of a second process performed by the VCIB in the present embodiment.

### DESCRIPTION OF THE PREFERRED EMBODIMENTS

An embodiment of the present disclosure will be described below in detail with reference to the drawings. The same or corresponding elements in the drawings have the same reference characters allotted and description thereof will not be repeated.

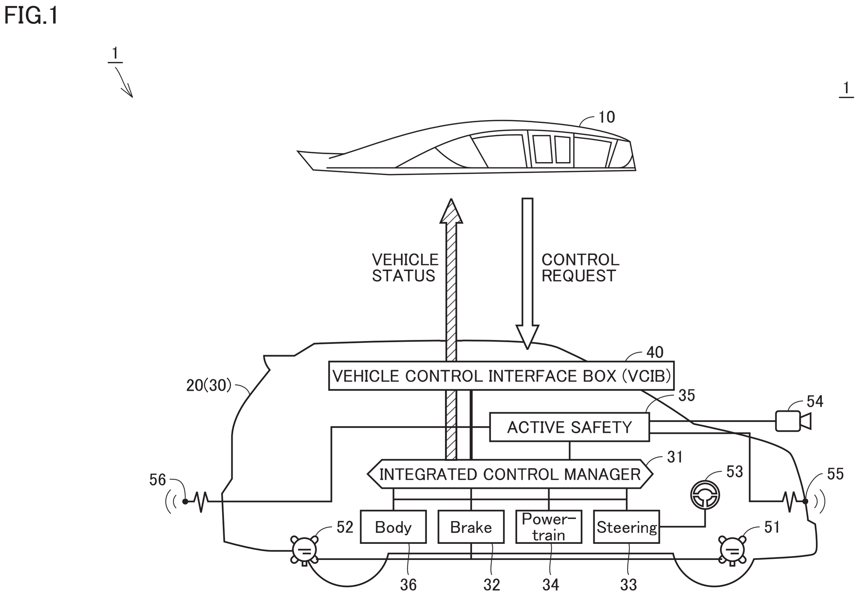

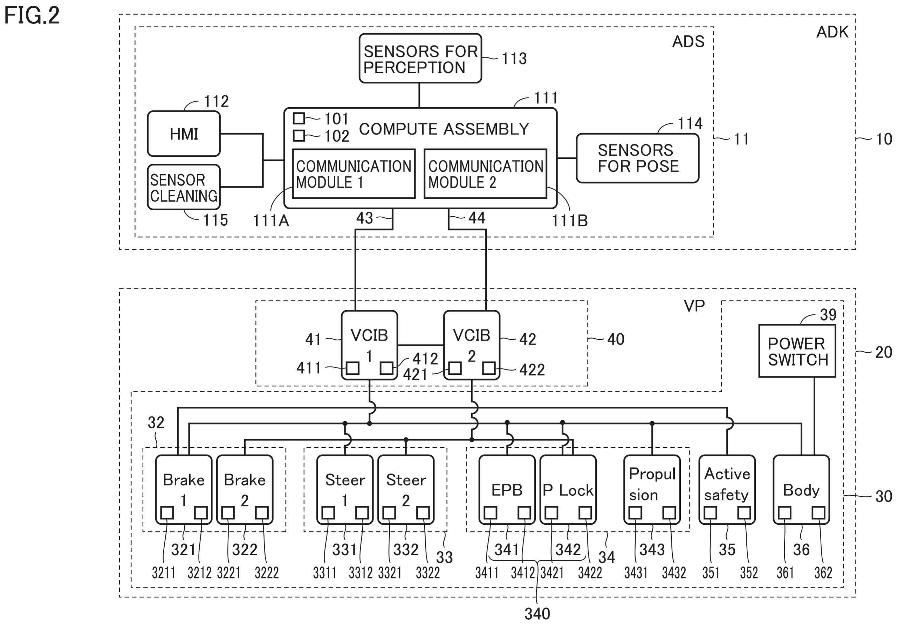

Fig. 1 is a diagram showing overview of a vehicle 1 according to an embodiment of the present disclosure. Fig. 2 is a diagram showing in detail configurations of an ADK 10, a VCIB 40 and a VP 20 according to the present embodiment. Referring to Figs. 1 and 2, vehicle 1 includes ADK 10 and VP 20. ADK 10 is configured as being attachable to VP 20 (mountable on vehicle 1). ADK 10 and VP 20 are configured to communicate with each other through VCIB 40.

VP 20 can carry out autonomous driving in accordance with control requests from ADK 10. Though Fig. 1 shows ADK 10 at a position distant from VP 20, ADK 10 is actually attached to a rooftop or the like of VP 20. ADK 10 can also be removed from VP 20. While ADK 10 is not attached, VP 20 carries out travel control (travel control in accordance with an operation by a user) in a manual mode (manual driving mode).

ADK 10 includes an autonomous driving system (ADS) 11 for autonomous driving of vehicle 1. For example, ADS 11 creates a driving plan of vehicle 1. ADS 11 outputs various control requests for travel of vehicle 1 in accordance with the driving plan to VP 20 in accordance with an application program interface (API) defined for each control request. ADS 11 receives various signals indicating vehicle statuses (statuses of VP 20) from VP 20 in accordance with the API defined for each signal. Then, ADS 11 has the vehicle status reflected on the driving plan.

VP 20 includes a base vehicle 30 and VCIB 40. Base vehicle 30 carries out various types of vehicle control in accordance with a control request from ADK 10 (ADS 11). Base vehicle 30 includes various vehicle-mounted systems and various sensors for controlling base vehicle 30. More specifically, base vehicle 30 includes an integrated control manager 31, a brake system 32, a steering system 33, a powertrain system 34, an active safety system 35, a body system 36, wheel speed sensors 51 and 52, a pinion angle sensor 53, a camera 54, radar sensors 55 and 56, and a power switch 39.

Integrated control manager 31 includes a processor such as a central processing unit (CPU) and a memory such as a read only memory (ROM) and a random access memory (RAM), and integrally controls the systems (brake system 32, steering system 33, powertrain system 34, active safety system 35, and body system 36) involved with operations of vehicle 1.

Brake system 32 is configured to control a braking apparatus provided in each wheel of base vehicle 30. The braking apparatus includes, for example, a disc brake system that is operated with a hydraulic pressure regulated by an actuator.

Wheel speed sensors 51 and 52 are connected to brake system 32. Wheel speed sensors 51 and 52 detect rotation speeds of a front wheel and a rear wheel of base vehicle 30 and output the detected rotation speeds of the front wheel and the rear wheel to brake system 32, respectively. Brake system 32 outputs to VCIB 40, the rotation speed of each wheel as one of pieces of information included in the vehicle statuses. Brake system 32 generates a braking command to a braking apparatus in accordance with a prescribed control request outputted from ADS 11 through VCIB 40 and integrated control manager 31. Brake system 32 controls the braking apparatus based on the generated braking command. Integrated control manager 31 can calculate a speed of vehicle 1 (vehicle speed) based on the rotation speed of each wheel.

Steering system 33 is configured to control a steering angle (wheel steer angle) of a steering wheel of vehicle 1 with a steering apparatus. The steering apparatus includes, for example, rack-and-pinion electric power steering (EPS) that allows adjustment of a steering angle by an actuator.

Pinion angle sensor 53 is connected to steering system 33. Pinion angle sensor 53 detects an angle of rotation of a pinion gear (a pinion angle) coupled to a rotation shaft of the actuator and outputs the detected pinion angle to steering system 33. Steering system 33 outputs to VCIB 40, the pinion angle as one of pieces of information included in the vehicle statuses. Steering system 33 generates a steering command to the steering apparatus in accordance with a prescribed control request outputted from ADS 11 through VCIB 40 and integrated control manager 31. Steering system 33 controls the steering apparatus based on the generated steering command.

Powertrain system 34 controls an electric parking brake (EPB) system 341 provided in at least one of a plurality of wheels, a parking lock (P-Lock) system 342 provided in a transmission of vehicle 1, and a propulsion system 343 including a shift apparatus configured to allow selection of a shift range.

Active safety system 35 detects an obstacle (a pedestrian, a bicycle, a parked vehicle, a utility pole, or the like) in front or in the rear with the use of camera 54 and radar sensors 55 and 56. Active safety system 35 determines whether or not vehicle 1 may collide with the obstacle based on a distance between vehicle 1 and the obstacle and a direction of movement of vehicle 1. When active safety system 35 determines that there is possibility of collision, it outputs a braking command to brake system 32 through integrated control manager 31 so as to increase braking force.

Body system 36 is configured to control, for example, components such as a direction indicator (a turn lamp or a hazard light), a horn, a wiper, a headlamp and a brake lamp, depending on a state of travel or an environment around vehicle 1. Body system 36 controls each component in accordance with a prescribed control request outputted from ADS 11 through VCIB 40 and integrated control manager 31.

Power switch 39 is implemented by a push switch and switches vehicle 1 on or off every time power switch 39 is pressed by a user.

VCIB 40 is configured to communicate with ADS 11 over a controller area network (CAN). VCIB 40 receives various control requests from ADS 11 or outputs a vehicle status to ADS 11 by executing a prescribed API defined for each signal. When VCIB 40 receives the control request from ADK 10, it outputs a control command corresponding to the control request to a system corresponding to the control command through integrated control manager 31. VCIB 40 obtains various types of information on base vehicle 30 from various systems through integrated control manager 31 and outputs the status of base vehicle 30 as the vehicle status to ADS 11.

Vehicle 1 may be used as one of constituent elements of a mobility as a service (MaaS) system. The MaaS system includes, for example, a data server and a mobility service platform (MSPF), in addition to vehicle 1.

The MSPF is an integrated platform to which various mobility services are connected. Autonomous driving related mobility services are connected to the MSPF. In addition to the autonomous driving related mobility services, mobility services provided by a ride-share company, a car-sharing company, a rent-a-car company, a taxi company, and an insurance company may be connected to the MSPF.

Vehicle 1 further includes a data communication module (DCM) capable of wirelessly communicating with a data server. The DCM outputs vehicle information such as a speed, a position, or an autonomous driving state to the data server. The DCM receives from the autonomous driving related mobility services through the MSPF and the data server, various types of data for management of travel of an autonomous driving vehicle including vehicle 1 in the mobility services.

The MSPF publishes APIs for using various types of data on vehicle statuses and vehicle control necessary for development of ADS 11. Various mobility services can use various functions provided by the MSPF depending on service contents, by using the APIs published on the MSPF. For example, the autonomous driving related mobility services can obtain operation control data of vehicle 1 or information stored in the data server from the MSPF by using the APIs published on the MSPF. The autonomous driving related mobility services can transmit data for managing an autonomous driving vehicle including vehicle 1 to the MSPF by using the API.

ADS 11 includes a compute assembly 111, a human machine interface (HMI) 112, sensors for perception 113, sensors for pose 114, and a sensor cleaning 115.

Compute assembly 111 includes a processor 101 such as a CPU and a memory 102 such as a ROM and a RAM. A program executable by processor 101 is stored in memory 102. During autonomous driving of vehicle 1, compute assembly 111 obtains information indicating an environment around vehicle 1 and information indicating a pose, a behavior, and a position of vehicle 1 from various sensors (which will be described later), and obtains a vehicle status from VP 20 through VCIB 40 and sets a next operation (acceleration, deceleration, or turning) of vehicle 1. Compute assembly 111 outputs various commands for realizing a next operation to VCIB 40. Compute assembly 111 further includes communication modules (each of which is also called a "vehicle interface module (VIM)" below) 111A and 111B. Communication modules 111A and 111B are each configured to communicate with VCIB 40.

HMI 112 presents information to a user and accepts an operation by the user during autonomous driving, during manual driving requiring an operation by the user, or at the time of transition between autonomous driving and manual driving requiring an operation by the user. HMI 112 includes, for example, an input and output apparatus such as a touch panel display provided in base vehicle 30.

Sensors for perception 113 are sensors that perceive an environment around vehicle 1. Sensors for perception 113 include, for example, at least one of laser imaging detection and ranging (LIDAR), a millimeter-wave radar, and a camera. The LIDAR measures a distance and a direction to an object, for example, by emitting laser beams of infrared pulses and detecting laser beams reflected by the object. The millimeter-wave radar measures a distance and a direction to an object by emitting millimeter waves and detecting millimeter waves reflected by the object. The camera is arranged, for example, on a rear side of a room mirror and shoots an image of the front of vehicle 1.

Sensors for pose 114 are sensors that detect a pose, a behavior, or a position of vehicle 1. Sensors for pose 114 include, for example, an inertial measurement unit (IMU) and a global positioning system (GPS). The IMU detects, for example, an acceleration in a front-rear direction, a lateral direction, and a vertical direction of vehicle 1 and an angular speed in a roll direction, a pitch direction, and a yaw direction of vehicle 1. The GPS detects a position of vehicle 1 based on information received from a plurality of GPS satellites that orbit the Earth.

Sensor cleaning 115 is configured to remove with a cleaning solution or a wiper, soiling attached to various sensors (a lens of the camera or a portion from which laser beams are emitted) during traveling of vehicle 1.

VCIB 40 includes a main VCIB 41 and a sub VCIB 42. VCIBs 41 and 42 include processors 411 and 421 such as CPUs and memories 412 and 422 such as ROMs and RAMs, respectively. Programs executable by processors 411 and 421 and data processed by the programs are stored in memories 412 and 422, respectively. Main VCIB 41 and communication module 111A are communicatively connected to each other through a communication bus 43 (main bus). Sub VCIB 42 and communication module 111B are communicatively connected to each other through a communication bus 44 (sub bus). Furthermore, main VCIB 41 and sub VCIB 42 are communicatively connected to each other.

VCIBs 41 and 42 each relay control requests and vehicle information between ADS 11 and VP 20. VCIBs 41 and 42 interface between base vehicle 30 and ADS 11 through communication buses 43 and 44, respectively. VCIBs 41 and 42 each generate a control command from a control request from ADS 11 with the use of an API.

For example, a control command corresponding to a control request supplied from ADS 11 to VCIB 40 includes a propulsion direction command requesting switching of the shift range, an immobilization command requesting activation/deactivation of EPB system 341 and P-Lock system 342, an acceleration command requesting acceleration or deceleration of vehicle 1, a wheel steer angle command requesting a wheel steer angle of a steering wheel, an autonomization command requesting switching between an autonomous mode (autonomous driving mode) and a manual mode (manual driving mode), and a standstill command requesting keeping on stationary or keeping off stationary of the vehicle.

Then, VCIBs 41 and 42 each output the generated control command to a corresponding system of a plurality of systems included in VP 20. VCIBs 41 and 42 each generate information indicating a vehicle status from the vehicle information from each system of VP 20 with the use of the API. The information indicating the vehicle status may be information identical to the vehicle information or may be information extracted from the vehicle information to be used for processing performed by ADS 11. VCIBs 41 and 42 each output the generated information indicating the vehicle status to ADS 11.

Brake system 32 includes brake systems 321 and 322. Steering system 33 includes steering systems 331 and 332. Powertrain system 34 includes a wheel lock control system 340 and propulsion system 343.

Though VCIB 41 and VCIB 42 are basically equivalent in function to each other, they are partially different in systems connected thereto that are included in VP 20. Specifically, main VCIB 41, brake system 321, steering system 331, EPB system 341, P-Lock system 342, propulsion system 343, and body system 36 are communicatively connected to one another through a communication bus. Sub VCIB 42, brake system 322, steering system 332, and P-Lock system 342 are communicatively connected to one another through a communication bus.

As VCIBs 41 and 42 equivalent in function relating to an operation of at least one of (for example, braking or steering) systems are thus included in VCIB 40, control systems between ADS 11 and VP 20 are redundant. Thus, when some kind of failure occurs in the system, the function of VP 20 can be maintained by switching between the control systems as appropriate or disconnection of a control system where failure has occurred.

Brake systems 321 and 322 include processors 3211 and 3221 such as CPUs and memories 3212 and 3222 such as ROMs and RAMs, respectively. Brake systems 321 and 322 are each configured to control a braking apparatus. Brake systems 321 and 322 generate braking commands to the braking apparatus in accordance with control requests outputted from ADS 11 through VCIBs 41 and 42, respectively. Brake system 321 and brake system 322 may be equivalent in function to each other. Alternatively, one of brake systems 321 and 322 may be configured to independently control braking force of each wheel and the other thereof may be configured to control braking force such that equal braking force is generated in the wheels. For example, brake systems 321 and 322 may control the braking apparatus based on a braking command generated by any one of them, and when a failure occurs in that brake system, they may control the braking apparatus based on a braking command generated by the other of them.

Steering systems 331 and 332 include processors 3311 and 3321 such as CPUs and memories 3312 and 3322 such as ROMs and RAMs, respectively. Steering systems 331 and 332 are each configured to control a steering angle of a steering wheel of vehicle 1 with a steering apparatus. Steering systems 331 and 332 generate steering commands to the steering apparatus in accordance with control requests outputted from ADS 11 through VCIBs 41 and 42, respectively. Steering system 331 and steering system 332 may be equivalent in function to each other. Alternatively, steering systems 331 and 332 may control the steering apparatus based on the steering command generated by any one of them, and when a failure occurs in that steering system, they may control the steering apparatus based on a steering command generated by the other of them.

Wheel lock control system 340 is connected to VCIB 40, and includes EPB system 341 and P-Lock system 342.

EPB system 341 includes a processor 3411 such as a CPU and a memory 3412 such as a ROM and a RAM. EPB system 341 controls the EPB in accordance with a control request outputted from ADS 11 through VCIB 41. The EPB is provided separately from the braking apparatus (a disc brake system or the like), and fixes a wheel by an operation of an actuator. The EPB, for example, activates with an actuator, a drum brake for a parking brake provided in at least one of a plurality of wheels to fix the wheel, or activates a braking apparatus to fix a wheel with an actuator capable of regulating a hydraulic pressure to be supplied to the braking apparatus separately from brake systems 321 and 322. EPB system 341 has a brakeholding function, and is configured to switch between activation and release of brakehold.

P-Lock system 342 includes a processor 3421 such as a CPU and a memory 3422 such as a ROM and a RAM. P-Lock system 342 is connected to VCIB 42. P-Lock system 342 controls a P-Lock apparatus in accordance with a control request outputted from ADS 11 through VCIB 41. For example, when the control request includes a control request to set the shift range to a parking range (P range), P-Lock system 342 activates the P-Lock apparatus, and when the control request includes a control request to set the shift range to a shift range other than the P range, it deactivates the P-Lock apparatus. The P-Lock apparatus fits a protrusion provided at a tip end of a parking lock pawl, a position of which is adjusted by an actuator, into a tooth of a gear (locking gear) provided as being coupled to a rotational element in the transmission of vehicle 1. Rotation of an output shaft of the transmission is thus fixed and the wheel is fixed.

Propulsion system 343 includes a processor 3431 such as a CPU and a memory 3432 such as a ROM and a RAM. Propulsion system 343 includes a direction control system and a propulsive system. The direction control system is connected to VCIB 40. The direction control system controls a direction of travel (forward travel or rearward travel) of VP 20 by switching the shift range of the shift apparatus in accordance with the control request outputted from ADS 11 through VCIB 41. The shift ranges include a forward travel range (D range) and a rearward travel range (R range) in addition to the P range and a neutral range (N range). The propulsive system is connected to VCIB 40. The propulsive system controls propulsive force (for example, acceleration and deceleration) of VP 20 by controlling driving force from a drive source (a motor generator and an engine).

Active safety system 35 includes a processor 351 such as a CPU and a memory 352 such as a ROM and a RAM. Active safety system 35 is communicatively connected to brake system 321. As described previously, active safety system 35 detects an obstacle in front by using camera 54 and/or radar sensor 55, and when it determines that there is possibility of collision, it outputs a braking command to brake system 321 so as to increase braking force.

Body system 36 includes a processor 361 such as a CPU and a memory 362 such as a ROM and a RAM. Body system 36 controls components such as a direction indicator, a horn, and a wiper in accordance with a control request outputted from ADS 11 through VCIB 41.

For example, when an autonomous mode (autonomous driving mode) is selected by an operation by the user onto HMI 112 in vehicle 1, autonomous driving is carried out. During autonomous driving, ADS 11 initially creates a driving plan as described previously. Examples of the driving plan include a plan to continue straight travel, a plan to turn left/right at a prescribed intersection on a predetermined travel path, and a plan to change a travel lane. ADS 11 calculates a controllable physical quantity (an acceleration, a deceleration, and a wheel steer angle) necessary for operations of vehicle 1 in accordance with the created driving plan. ADS 11 splits the physical quantity for each execution cycle time of the API. ADS 11 outputs a control request representing the split physical quantity to VCIB 40 by means of the API. Furthermore, ADS 11 obtains a vehicle status (an actual direction of movement of vehicle 1 and a state of fixation of the vehicle) from VP 20 and creates again the driving plan on which the obtained vehicle status is reflected. ADS 11 thus allows autonomous driving of vehicle 1.

As described above, in vehicle 1, as paths through which signals are exchanged between ADK 10 and VP 20, there are two systems, i.e., a first path via communication bus 43 serving as a main bus and main VCIB 41 and a second path via communication bus 44 serving as a sub bus and sub VCIB 42. When both of these two paths fail, ADK 10 cannot instruct VP 20 of transition to manual driving, which may make it impossible to move base vehicle 30 by manual driving.

Thus, when a two-system failure that makes communication or control via the first path and the second path impossible occurs while the driving mode set in VCIB 41 is the autonomous driving mode, a first function unit (e.g., brake systems 321 and 322 or steering systems 331 and 332) of base vehicle 30 carries out emergency stop control, and when the two-system failure occurs while the driving mode set in VCIB 42 is the autonomous driving mode, a second function unit (e.g., brake systems 321 and 322 or steering systems 331 and 332) of base vehicle 30 carries out the emergency stop control. When an operation of switching off base vehicle 30 by power switch 39 is accepted after the emergency stop control is carried out, VCIB 41 switches the driving mode set in VCIB 41 to the manual driving mode, or when the operation of switching off base vehicle 30 by power switch 39 is accepted after the emergency stop control is carried out, VCIB 42 switches the driving mode set in VCIB 42 to the manual driving mode.

Thus, even when an instruction from ADK 10 is not transmitted to base vehicle 30 due to the occurrence of the two-system failure, the emergency stop control is carried out. When the operation of switching off base vehicle 30 is accepted after the emergency stop control, the driving mode is switched to the manual driving mode. As a result, switching to manual driving is possible even when transition to manual driving cannot be made in accordance with an instruction from ADK 10.

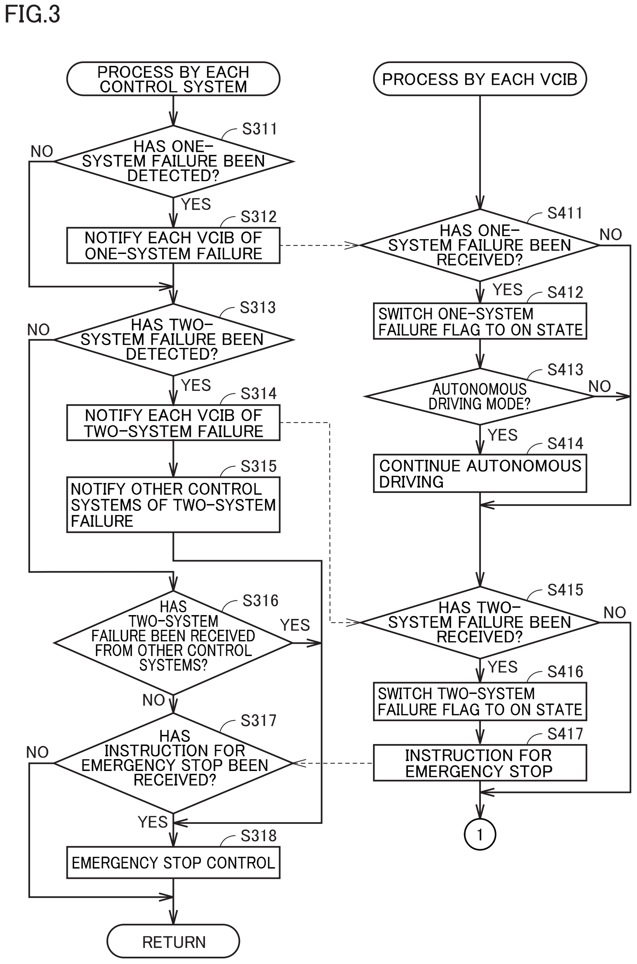

Fig. 3 is a flowchart showing a flow of a process performed by each control system and a first process performed by each of VCIBs 41 and 42 in the present embodiment. Referring to Fig. 3, the process by each control system is called from a higher-level process and performed at prescribed cycles by each of processors 3211 and 3221 of brake systems 321 and 322 and processors 3311 and 3321 of steering systems 331 and 332 (hereinafter referred to as "processor of the control system"). The process by each VCIB is called from a higher-level process and performed at prescribed cycles by each of processors 411 and 421 of VCIBs 41 and 42.

The processor of the control system determines whether or not the one-system failure that makes communication or control via the first path or the second path impossible has been detected (step S311). When the processor of the control system determines that the one-system failure has been detected (YES in step S311), the processor of the control system notifies each of VCIBs 41 and 42 that the one-system failure has been detected (step S312).

Each of processors 411 and 421 of VCIBs 41 and 42 determines whether or not it has received a notification about detection of the one-system failure from the control system (step S411). When each of processors 411 and 421 of VCIBs 41 and 42 determines that it has received the notification about detection of the one-system failure from any control system (YES in step S411), each of processors 411 and 421 of VCIBs 41 and 42 switches a one-system failure flag indicating whether or not the one-system failure has occurred to an ON state indicating that the one-system failure has occurred (step S412).

Each of processors 411 and 421 of VCIBs 41 and 42 determines whether or not the driving mode of each of VCIBs 41 and 42 is the autonomous driving mode (step S413). When each of processors 411 and 421 of VCIBs 41 and 42 determines that the driving mode of each of VCIBs 41 and 42 is the autonomous driving mode (YES in step S413), each of processors 411 and 421 of VCIBs 41 and 42 continues control for autonomous driving of base vehicle 30 (step S414).

The processor of the control system determines whether or not the two-system failure that makes communication or control via the first path and the second path impossible has been detected (step S313). When the processor of the control system determines that the two-system failure has been detected (YES in step S313), the processor of the control system notifies each of VCIBs 41 and 42 that the two-system failure has been detected (step S314). In addition, the processor of the control system notifies the other control systems that the two-system failure has been detected (step S315).

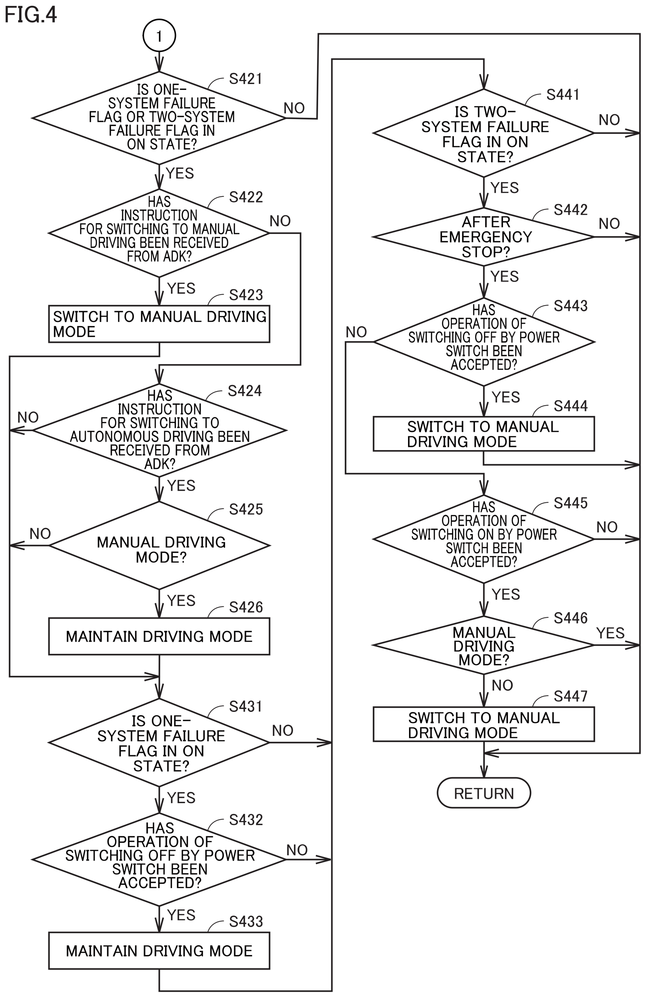

When each of processors 411 and 421 of VCIBs 41 and 42 determines that it has not received the notification about detection of the one-system failure from any control system (NO in step S411), when each of processors 411 and 421 of VCIBs 41 and 42 determines that the driving mode of each of VCIBs 41 and 42 is not the autonomous driving mode (NO in step S413), or after step S414, each of processors 411 and 421 of VCIBs 41 and 42 determines whether or not it has received a notification about detection of the two-system failure from the control system (step S415). When each of processors 411 and 421 of VCIBs 41 and 42 determines that it has received the notification about detection of the two-system failure from any control system (YES in step S415), each of processors 411 and 421 of VCIBs 41 and 42 switches a two-system failure flag indicating whether or not the two-system failure has occurred to an ON state indicating that the two-system failure has occurred (step S416) and instructs each control system to carry out the emergency stop control (step S417). Thereafter, each of processors 411 and 421 of VCIBs 41 and 42 causes the process to be performed to proceed to a process starting from the circled number "1" in Fig. 4 described below.

When the processor of the control system determines that the two-system failure has not been detected (NO in step S313), the processor of the control system determines whether or not it has received a notification about detection of the two-system failure from the other control systems (step S316). When the processor of the control system determines that it has not received the notification about detection of the two-system failure from the other control systems (NO in step S316), the processor of the control system determines whether or not it has received an instruction for emergency stop from each of VCIBs 41 and 42 (step S317).

When the processor of the control system determines that it has received the instruction for emergency stop from each of VCIBs 41 and 42 (YES in step S317), when the processor of the control system determines that it has received the notification about detection of the two-system failure from the other control systems (YES in step S316), or after step S315, the processor of the control system carries out control for emergency stop of base vehicle 30 (step S318). When the processor of the control system determines that it has not received the instruction for emergency stop from each of VCIBs 41 and 42 (NO in step S317), or after step S318, the processor of the control system returns the process to be performed to the higher-level process from which this process by each control system was called.

Fig. 4 is a flowchart showing a flow of a second process performed by each of VCIBs 41 and 42 in the present embodiment. Referring to Fig. 4, this process is performed by each of processors 411 and 421 of VCIBs 41 and 42 at prescribed cycles after the first process shown in Fig. 3.

When each of processors 411 and 421 of VCIBs 41 and 42 determines that it has not received the notification about detection of the two-system failure from any control system (NO in step S415 in Fig. 3), or after step S417, each of processors 411 and 421 of VCIBs 41 and 42 determines whether or not the one-system failure flag or the two-system failure flag is in the ON state (step S421).

When each of processors 411 and 421 of VCIBs 41 and 42 determines that the one-system failure flag or the two-system failure flag is in the ON state (YES in step S421), each of processors 411 and 421 of VCIBs 41 and 42 determines whether or not it has received an instruction for switching to manual driving from ADK 10 (step S422). When each of processors 411 and 421 of VCIBs 41 and 42 determines that it has received the instruction for switching to manual driving from ADK 10 (YES in step S422), each of processors 411 and 421 of VCIBs 41 and 42 switches the driving mode to the manual driving mode (step S423).

When each of processors 411 and 421 of VCIBs 41 and 42 determines that it has not received the instruction for switching to manual driving from ADK 10 (NO in step S422), each of processors 411 and 421 of VCIBs 41 and 42 determines whether or not it has received an instruction for switching to autonomous driving from ADK 10 (step S424). When each of processors 411 and 421 of VCIBs 41 and 42 determines that it has received the instruction for switching to autonomous driving from ADK 10 (YES in step S424), each of processors 411 and 421 of VCIBs 41 and 42 determines whether or not the currently set driving mode is the manual driving mode (step S425). When each of processors 411 and 421 of VCIBs 41 and 42 determines that the currently set driving mode is the manual driving mode (YES in step S425), each of processors 411 and 421 of VCIBs 41 and 42 maintains the currently set driving mode (step S426).

When each of processors 411 and 421 of VCIBs 41 and 42 determines that it has not received the instruction for switching to autonomous driving from ADK 10 (NO in step S424), when each of processors 411 and 421 of VCIBs 41 and 42 determines that the currently set driving mode is not the manual driving mode (NO in step S425), after step S423, or after step S426, each of processors 411 and 421 of VCIBs 41 and 42 determines whether or not the one-system failure flag is in the ON state (step S431).

When each of processors 411 and 421 of VCIBs 41 and 42 determines that the one-system failure flag is in the ON state (YES in step S431), each of processors 411 and 421 of VCIBs 41 and 42 determines whether or not an operation of switching off base vehicle 30 by power switch 39 has been accepted from the user (step S432). When each of processors 411 and 421 of VCIBs 41 and 42 determines that the operation of switching off base vehicle 30 by power switch 39 has been accepted (YES in step S432), each of processors 411 and 421 of VCIBs 41 and 42 maintains the currently set driving mode (step S433).

When each of processors 411 and 421 of VCIBs 41 and 42 determines that the one-system failure flag is not in the ON state (NO in step S431), when each of processors 411 and 421 of VCIBs 41 and 42 determines that the operation of switching off base vehicle 30 by power switch 39 has not been accepted (NO in step S432), or after step S433, each of processors 411 and 421 of VCIBs 41 and 42 determines whether or not the two-system failure flag is in the ON state (step S441).

When each of processors 411 and 421 of VCIBs 41 and 42 determines that the two-system failure flag is in the ON state (YES in step S441), each of processors 411 and 421 of VCIBs 41 and 42 determines whether or not it is after emergency stop (step S442). When each of processors 411 and 421 of VCIBs 41 and 42 determines that it is after emergency stop (YES in step S442), each of processors 411 and 421 of VCIBs 41 and 42 determines whether or not an operation of switching off base vehicle 30 by power switch 39 has been accepted from the user (step S442).

When each of processors 411 and 421 of VCIBs 41 and 42 determines that the operation of switching off base vehicle 30 by power switch 39 has been accepted (YES in step S442), each of processors 411 and 421 of VCIBs 41 and 42 switches the driving mode to the manual driving mode if the driving mode is the autonomous driving mode (maintains the driving mode if the driving mode is the manual driving mode) (step S444).

When each of processors 411 and 421 of VCIBs 41 and 42 determines that the operation of switching off base vehicle 30 by power switch 39 has not been accepted (NO in step S442), each of processors 411 and 421 of VCIBs 41 and 42 determines whether or not an operation of switching on base vehicle 30 by power switch 39 has been accepted from the user (step S445).

When each of processors 411 and 421 of VCIBs 41 and 42 determines that the operation of switching on base vehicle 30 by power switch 39 has been accepted (YES in step S445), each of processors 411 and 421 of VCIBs 41 and 42 determines whether or not the currently set driving mode is the manual driving mode (step S446). When each of processors 411 and 421 of VCIBs 41 and 42 determines that the currently set driving mode is not the manual driving mode (NO in step S446), each of processors 411 and 421 of VCIBs 41 and 42 switches the driving mode to the manual driving mode (step S447).

When each of processors 411 and 421 of VCIBs 41 and 42 determines that the one-system failure flag and the two-system failure flag are not in the ON state (NO in step S421 or step S441), when each of processors 411 and 421 of VCIBs 41 and 42 determines that it is not after emergency stop (NO in step S442), when each of processors 411 and 421 of VCIBs 41 and 42 determines that the operation of switching on base vehicle 30 by power switch 39 has not been accepted (NO in step S445), when each of processors 411 and 421 of VCIBs 41 and 42 determines that the currently set driving mode is the manual driving mode (YES in step S446), after step S444, or after step S447, each of processors 411 and 421 of VCIBs 41 and 42 returns the process to be performed to the higher-level process from which this process by each VCIB was called.

### [Modifications]

(1) In the above-described embodiment, the first function unit and the second function unit such as brake systems 321 and 322 or steering systems 331 and 332 that perform the specific function used for autonomous driving and manual driving can directly communicate with the other function units (e.g., brake systems 321 and 322, steering systems 331 and 332, EPB system 341, P-Lock system 342, propulsion system 343, active safety system 35, and body system 36). However, the present disclosure is not limited thereto and these function units may only indirectly communicate with the other function units through VCIBs 41 and 42.
(2) In the above-described embodiment, each of the first function unit and the second function unit such as brake systems 321 and 322 or steering systems 331 and 332 that perform the specific function used for autonomous driving and manual driving has the processor and the memory. The first function unit and the second function unit perform the specific function of base vehicle 30 in cooperation with VCIBs 41 and 42. However, VCIBs 41 and 42 and the processor and the memory of each function unit may share the functions in any way. For example, a part of the function performed by the processor and the memory of each function unit may be performed by VCIBs 41 and 42.
(3) In the above-described embodiment, power switch 39 and VCIBs 41 and 42 indirectly exchange a signal via body system 36. However, the present disclosure is not limited thereto and power switch 39 and VCIBs 41 and 42 may directly exchange a signal.
(4) The above-described embodiment can be considered as disclosure of a device such as vehicle 1, ADK 10, ADS 11, VP 20, base vehicle 30 or VCIBs 41 and 42, or can be considered as disclosure of a control method or a control program in the device.

### [Summary]

(1) As shown in Figs. 1 and 2, VP 20 is a VP to and from which ADK 10 that gives an instruction for autonomous driving is attachable and detachable, the VP being configured to be capable of autonomous driving. As shown in Figs. 1 and 2, VP 20 includes: base vehicle 30 that performs a specific function (e.g., a braking function or a steering function) used for autonomous driving and manual driving, base vehicle 30 including a first function unit and a second function unit (e.g., first brake system 321 and second brake system 322 or first steering system 331 and second steering system 332); VCIB 41 that relays control communication between ADK 10 and the first function unit (e.g., brake system 321 or steering system 331) via a first path (e.g., a path including communication bus 43); VCIB 42 that relays control communication between ADK 10 and the second function unit (e.g., brake system 322 or steering system 332) via a second path (e.g., a path including communication bus 44); and power switch 39 that accepts an operation of switching on or off base vehicle 30.

As shown in Figs. 1 to 4, a driving mode of VP 20 set in each of VCIBs 41 and 42 is switchable to an autonomous driving mode or a manual driving mode. As shown in Fig. 3, when a two-system failure occurs in a case where the driving mode set in VCIB 41 is the autonomous driving mode, the first function unit carries out emergency stop control (e.g., step S318), the two-system failure being a failure that makes communication or control via the first path and the second path impossible, and when the two-system failure occurs in a case where the driving mode set in VCIB 42 is the autonomous driving mode, the second function unit carries out the emergency stop control. When an operation of switching off base vehicle 30 by power switch 39 is accepted after the emergency stop control is carried out, VCIB 41 switches the driving mode set in VCIB 41 to the manual driving mode (e.g., step S441 to step S444), or when the operation of switching off base vehicle 30 by power switch 39 is accepted after the emergency stop control is carried out, VCIB 42 switches the driving mode set in VCIB 42 to the manual driving mode.

Thus, even when an instruction from ADK 10 is not transmitted to base vehicle 30 due to the occurrence of the two-system failure, the emergency stop control is carried out. When the operation of switching off base vehicle 30 is accepted after the emergency stop control, the driving mode is switched to the manual driving mode. As a result, switching to manual driving is possible even when transition to manual driving cannot be made in accordance with an instruction from ADK 10. Thus, when a repairer or the like moves vehicle 1 by using a tow truck or the like, the repairer can move vehicle 1 by manual driving.

(2) As shown in Fig. 4, when a one-system failure occurs in a case where the driving mode set in VCIB 41 is the autonomous driving mode, VCIB 41 may switch the driving mode in accordance with an instruction from ADK 10 (e.g., step S421 to step S423), the one-system failure being a failure that makes communication or control via the first path or the second path impossible, and when the one-system failure occurs in a case where the driving mode set in VCIB 42 is the autonomous driving mode, VCIB 42 may switch the driving mode in accordance with an instruction from ADK 10.

Thus, when the one-system failure occurs, autonomous driving by a redundant system is also possible. Therefore, a determination of ADK 10 can be followed. As a result, control can be carried out in accordance with an intention of ADK 10.

(3) As shown in Fig. 4, when an instruction to switch the driving mode to the manual driving mode is received from ADK 10 at the time of occurrence of the two-system failure, VCIB 41 may switch the driving mode set in VCIB 41 to the manual driving mode (e.g., step S421 to step S423), or when an instruction to switch the driving mode to the manual driving mode is received from ADK 10 at the time of occurrence of the two-system failure, VCIB 42 may switch the driving mode set in VCIB 42 to the manual driving mode.

Thus, even at the time of occurrence of the two-system failure, the instruction to switch the driving mode from ADK 10 can be followed when the instruction from ADK 10 is possible. As a result, control can be carried out in accordance with an intention of ADK 10.

(4) As shown in Fig. 4, when the driving mode set in VCIB 41 is switched to the manual driving mode after the one-system failure or the two-system failure occurs, VCIB 41 may prohibit switching again to the autonomous driving mode (e.g., step S421 and step S424 to step S426), or when the driving mode set in VCIB 42 is switched to the manual driving mode after the one-system failure or the two-system failure occurs, VCIB 42 may prohibit switching again to the autonomous driving mode.

Thus, when the driving mode is switched to the manual driving mode after the one-system failure or the two-system failure occurs, there is high possibility that continuation of autonomous driving is difficult. As a result, by prohibiting switching again to the autonomous driving mode, the reliability of control can be increased. Although the embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A vehicle platform (20) configured to receive an instruction for autonomous driving from an autonomous driving kit (10) that is attachable and detachable to the vehicle platform, the vehicle platform being configured to be capable of autonomous driving, the vehicle platform comprising:
a base vehicle (30) including a first function unit (321, 331) and a second function unit (322, 332) configured to perform a specific function used for autonomous driving and manual driving;
a first vehicle control interface box (41) configured to relay control communication between the autonomous driving kit and the first function unit via a first path;
a second vehicle control interface box (42) configured to relay control communication between the autonomous driving kit and the second function unit via a second path; and
a power switch (39) configured to accept an operation of switching on or off the base vehicle, wherein
a driving mode of the vehicle platform set in each of the first vehicle control interface box and the second vehicle control interface box is switchable to an autonomous driving mode or a manual driving mode,
when a two-system failure occurs in a case where the driving mode set in the first vehicle control interface box is the autonomous driving mode, the first function unit carries out emergency stop control (S318), the two-system failure being a failure that makes communication or control via the first path and the second path impossible, and
when the two-system failure occurs in a case where the driving mode set in the second vehicle control interface box is the autonomous driving mode, the second function unit carries out the emergency stop control, and
when an operation of switching off the base vehicle by the power switch (39) is accepted after the emergency stop control is carried out, the first vehicle control interface box (41) switches the driving mode set in the first vehicle control interface box to the manual driving mode (S441 to S444), or
when the operation of switching off the base vehicle by the power switch (39) is accepted after the emergency stop control is carried out, the second vehicle control interface box (42) switches the driving mode set in the second vehicle control interface box to the manual driving mode.

2. The vehicle platform according to claim 1, wherein
when a one-system failure occurs in a case where the driving mode set in the first vehicle control interface box (41) is the autonomous driving mode, the first vehicle control interface box switches the driving mode in accordance with an instruction from the autonomous driving kit, the one-system failure being a failure that makes communication or control via the first path or the second path impossible, and
when the one-system failure occurs in a case where the driving mode set in the second vehicle control interface box (42) is the autonomous driving mode, the second vehicle control interface box switches the driving mode in accordance with an instruction from the autonomous driving kit.

3. The vehicle platform according to claim 2, wherein
when an instruction to switch the driving mode to the manual driving mode is received from the autonomous driving kit (10) at the time of occurrence of the two-system failure, the first vehicle control interface box (41) switches the driving mode set in the first vehicle control interface box to the manual driving mode, or
when an instruction to switch the driving mode to the manual driving mode is received from the autonomous driving kit (10) at the time of occurrence of the two-system failure, the second vehicle control interface box (42) switches the driving mode set in the second vehicle control interface box to the manual driving mode.

4. The vehicle platform according to claim 3, wherein
when the driving mode set in the first vehicle control interface box (41) is switched to the manual driving mode after the one-system failure or the two-system failure occurs, the first vehicle control interface box prohibits switching again to the autonomous driving mode, or
when the driving mode set in the second vehicle control interface box (42) is switched to the manual driving mode after the one-system failure or the two-system failure occurs, the second vehicle control interface box prohibits switching again to the autonomous driving mode.

5. A vehicle (1) comprising the vehicle platform (20) according to any of claims 1 to 4.

6. The vehicle (1) of claim 5, comprising an autonomous driving kit (10) configured to give an instruction for autonomous driving of the vehicle (1).

7. The vehicle (1) of claim 6, wherein the autonomous driving kit (10) is configured to be detachable to and from the vehicle platform (20).

8. A method for controlling a vehicle platform (20) configured to receive an instruction for autonomous driving from an autonomous driving kit (10) that is attachable and detachable to and from the vehicle platform, the vehicle platform being configured to be capable of autonomous driving,
the vehicle platform including:
a base vehicle (30) that performs a specific function used for autonomous driving and manual driving;
a first vehicle control interface box (41) that relays control communication between the autonomous driving kit and the base vehicle via a first path;
a second vehicle control interface box (42) that relays control communication between the autonomous driving kit and the base vehicle via a second path; and
a power switch (39) that accepts an operation of switching on or off the base vehicle,
a driving mode of the vehicle platform set in each of the first vehicle control interface box and the second vehicle control interface box being switchable to an autonomous driving mode or a manual driving mode,
the method comprising:
when a two-system failure occurs in a case where the driving mode set in the first vehicle control interface box is the autonomous driving mode, controlling, by the first vehicle control interface box, the base vehicle to carry out emergency stop control (S318), the two-system failure being a failure that makes communication or control via the first path and the second path impossible; and
when the two-system failure occurs in a case where the driving mode set in the second vehicle control interface box is the autonomous driving mode, controlling, by the second vehicle control interface box, the base vehicle to carry out the emergency stop control; and
when an operation of switching off the base vehicle by the power switch is accepted after the emergency stop control is carried out, switching, by the first vehicle control interface box, the driving mode set in the first vehicle control interface box to the manual driving mode (S441 to S444); or
when the operation of switching off the base vehicle by the power switch is accepted after the emergency stop control is carried out, switching, by the second vehicle control interface box, the driving mode set in the second vehicle control interface box to the manual driving mode.
